# EUROPÄISCHE PATENTSCHRIFT

(11) **EP 1 626 336 B1**
(45) Veröffentlichungstag und Bekanntmachung des Hinweises auf die Patenterteilung: **11.08.2010**
(21) Anmeldenummer: 05010118.7
(22) Anmeldetag: 10.05.2005
(51) Int. Cl.: G06F 7/48

(54) **Unterdrückung von Quantisierungsrauschen in einer Datenverarbeitungseinrichtung**
Suppression of quantisation noise in a data processor
Suppression de bruit de quantification dans un dispositif de traitement de données

(30) Priorität: 12.08.2004 DE 102004039345
(43) Veröffentlichungstag der Anmeldung: 15.02.2006
(73) Patentinhaber: Trident Microsystems (Far East) Ltd., Grand Cayman (KY)
(72) Erfinder: Vierthaler, Matthias, 79211 Denzlingen (DE); Pfister, Florian, 79331 Teningen (DE); Lücking, Dieter, 79110 Freiburg (DE)
(74) Vertreter: Epping - Hermann - Fischer

(56) Entgegenhaltungen:
- WO-A-00/73872
- US-A- 4 872 132
- KARI KALLIOJAERVI ET AL: "ROUNDOFF ERRORS IN BLOCK-FLOATING-POINT SYSTEMS" IEEE TRANSACTIONS ON SIGNAL PROCESSING, IEEE SERVICE CENTER, NEW YORK, NY, US, Bd. 44, Nr. 4, April 1996 (1996-04), Seiten 783-790, XP000592352 ISSN: 1053-587X
- A. CHHABRA, R. IYER: "A Block Floating Point Implementation on the TMS320C54x DSP" TEXAS INSTRUMENTS APPLICATION REPORT, Dezember 1999 (1999-12), XP007903070
- BERKELEY DESIGN TECHNOLOGY: "Choosing a DSP Processor" INTERNET CITATION, [Online] 2000, XP007903051 Gefunden im Internet: URL:http://www.bdti.com/articles/choose_20 00.pdf> [gefunden am 2007-09-27]
- ARLO REEVES A: "OPTIMIZED FAST HARTLEY TRANSFORM FOR THE MC68000 WITH APPLICATIONS IN IMAGE PROCESSING" THESIS, XX, XX, März 1990 (1990-03), Seiten 1-141, XP007903064

## Beschreibung

Die Erfindung bezieht sich auf ein Verfahren zur Rauschunterdrückung in einer Datenverarbeitungseinrichtung mit den oberbegrifflichen Merkmalen des Patentanspruchs 1 bzw. auf eine Vorrichtung zur Datenverarbeitung mit einer Rauschunterdrückung gemäß den oberbegrifflichen Merkmalen des Patentanspruchs 14.

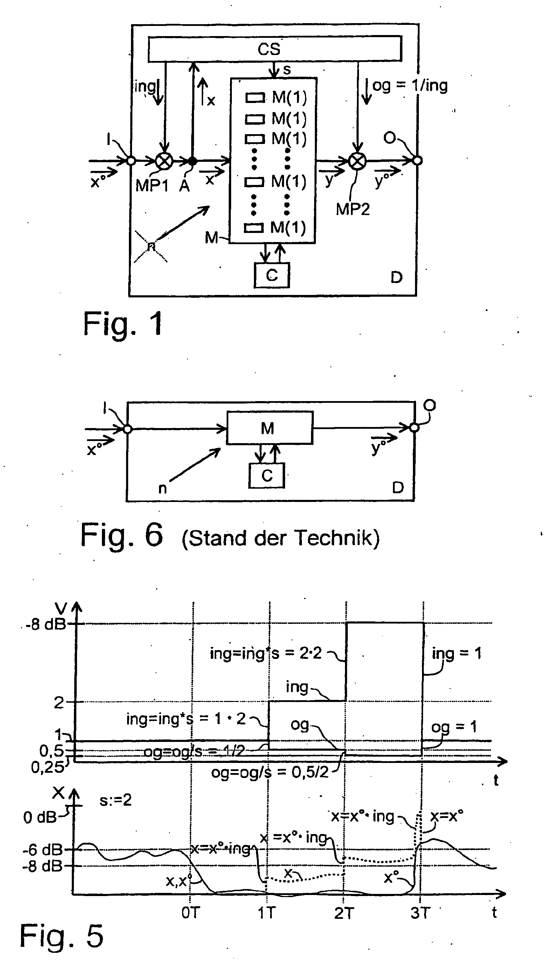

Bei der Verarbeitung von Signalen, insbesondere Tonsignalen in einer Vorrichtung zur Datenverarbeitung besteht oftmals das Problem eines Quantisierungsrauschens in einem Algorithmus durch eine limitierte Wortbreite, beispielsweise eine Wortbreite von 18 oder 24 Bit. Fig. 6 zeigt beispielhaft schematisch eine Vorrichtung zur Datenverarbeitung D mit einem Dateneingang I zum Eingeben von Eingangseingabedaten x°, mit einer Speichereinrichtung M mit Speicherplätzen zum Speichern von Eingabedaten als Speicherdaten, mit einem Datenausgang O zum Ausgeben von Ausgabedaten y° aus der Speichereinrichtung M und mit einer Datenverarbeitungseinrichtung bzw. Datenverarbeitungsinstanz C zum Verarbeiten der Speicherdaten. Bekannt ist außerdem eine Vorrichtung mit einer Skalierungseinrichtung zum Skalieren der Eingangseingabedaten x° mit einem Eingabeskalierungswert zu den zu speichernden Eingabedaten. Die Datenverarbeitungsinstanz C bildet dabei insbesondere einen Algorithmus aus, welcher auf die Speicherdaten einwirkt. Bei der gesamten Vorrichtung zur Datenverarbeitung D kann es sich in einem einfachen Fall um ein einfaches Verzögerungsglied zum zeitlich verzögerten Weiterleiten von Datenwerten einer Folge aus Daten handeln.

Durch die limitierte Wortbreite von beispielsweise 18 oder 24 Bit entsteht oftmals ein Quantisierungsrauschen in einem Algorithmus. Dieses Quantisierungsrauschen ist in Fig. 6 durch auf die Daten einwirkendes Rauschen n skizziert.

Zur Vermeidung oder Reduzierung des Rauschens n wird üblicherweise eine Hardware verwendet, welche eine größere Wortbreite zur Verarbeitung der Daten verwendet. Dies macht eine andere Hardware erforderlich, beispielsweise einen Prozessor mit einer größeren Wortbreite. Bei der Verwendung von Fließpunkt-Zahlen setzt sich jedes Wort aus Mantisse und Exponent zusammen. Auch dafür werden eine spezielle Hardware und eine entsprechende Wortbreite erforderlich, da neben der Mantisse auch der Exponent gespeichert werden muss.

Problematisch ist der Einfluss von Quantisierungsrauschen insbesondere bei der Verwendung von rauschverträrkenden Algorithmen (z.B. Digitale Filter) bei kleinen Eingangspegeln. Eine Skalierung der Eingabedaten bzw. einer entsprechenden Rückskalierung der von der Speichereinrichtung ausgegebenen Ausgabedaten zur besseren Aussteuerung der verfügbaren Wortbreite kann zu Störungen des Signals führen. Zwischen der Eingabe unskalierter bzw. mit einem anderen Eingabeskalierungswert skalierter Datenwerte in die Speichereinrichtung einerseits und andererseits der Ausgabe in der Speichereinrichtung zuvor aufgenommener unskalierter Datenwerte bis hin zur Ausgabe geändert skalierter Speicherdaten besteht ein zeitlicher Versatz. Dadurch werden Eingabeskalierungswert und Ausgabeskalierungswert zeitlich versetzt geändert, was problematisch ist.

Aus "A Block Floating Point Implementation on the TMS320C54x DSP" A. CHHABRA, R. IYER, TEXAS INSTRUMENTS APPLICATION REPORT, Dezember 1999 ist die Implementierung eines Block Floating Point (BFP) Algorithmus auf einem Texas Instruments TMS320C54x Prozessor bekannt. Es wird eine Methode zur Verarbeitung von Gleitkomma-Variablen auf einem Festkomma-Prozessor zur Berechnung der schnellen Fourier Transformation beschrieben. Dabei wird die Signalstärke stufenweise, d.h. von Iterationsstufe zu Iterationsstufe, verfolgt und gemäß einem BFP-Algorithmus durch Bestimmung des maximalen gemeinsamen Exponenten angepasst. Am Ende jeder Iteration werden die Ausgansdaten so Skaliert, dass sie in der nächsten Iterationsstufe nicht zu einem Datenüberlauf führen.

Die Aufgabe der Erfindung besteht darin, ein Verfahren bzw. eine Vorrichtung zur Rauschunterdrückung bei einer Datenverarbeitung vorzuschlagen, welche einfach realisierbar sind und vorzugsweise keine größere Wortbreite erforderlich machen, sondern mit einer limitierten Wortbreite auskommen.

Diese Aufgabe wird gelöst durch ein Verfahren zur Rauschunterdrückung in einer Datenverarbeitungseinrichtung mit den Merkmalen des Patentanspruchs 1 bzw. durch eine Vorrichtung zur Datenverarbeitung mit den Merkmalen des Patentanspruchs 14. Bevorzugt wird demgemäss ein Verfahren zur Rauschunterdrückung in einer Datenverarbeitungseinrichtung mit einer Speichereinrichtung, wobei in die Speichereinrichtung Eingabedaten eingegeben und als Speicherdaten in jeweiligen Speicherplätzen gespeichert werden und die Speicherdaten als Ausgabedaten aus der Speichereinrichtung ausgegeben werden, die Eingabedaten mit einem Eingabeskalierungswert skaliert sind und die Ausgabedaten mit einem Ausgabeskalierungswert skaliert werden, wobei zur Rauschunterdrückung bei einer Änderung des Eingabeskalierungswerts auch Speicherdaten in den Speicherplätzen entsprechend geändert werden.

Bevorzugt wird demgemäss eine Vorrichtung zur Datenverarbeitung mit einem Dateneingang zum Eingeben von Eingangseingabedaten, einer Speichereinrichtung mit Speicherplätzen zum Speichern von Eingabedaten als Speicherdaten, einem Datenausgang zum Ausgeben von Ausgabedaten aus der Speichereinrichtung, einer Datenverarbeitungsinstanz zum Verarbeiten der Speicherdaten und einer Skalierungseinrichtung zum Skalieren der Eingangseingabedaten mit einem Eingabeskalierungswert zu den zu speichernden Eingabedaten, wobei die Speichereinrichtung und/oder die Skalierungseinrichtung zur Rauschunterdrückung derart ausgebildet und/oder angesteuert sind, dass die Speicherdaten in den Speicherplätzen entsprechend einer Änderung der Eingabeskalierung des Eingabeskalierungswerts geändert werden.

Vorteilhafte Ausgestaltungen sind Gegenstand von abhängigen Ansprüchen.

Derngemäss wird bevorzugt ein Verfahren, bei dem bei der Änderung des Eingabeskalierungswertes alle Speicherdaten in den Speicherplätzen entsprechend geändert werden.

Bevorzugt wird demgemäss ein Verfahren, bei dem bei der Änderung des Eingabeskalierungswerts um einen Änderungswert die Speicherdaten in den Speicherplätzen mit dem gleichen Änderungswert geändert werden, wie der Eingabeskalierungswert.

Bevorzugt wird demgemäss ein Verfahren, bei dem bei der Änderung des Eingabeskalierungswerts auch der Ausgabeskalierungswert entsprechend geändert wird.

Bevorzugt wird demgemäss ein Verfahren, bei dem bei der Änderung des Eingabeskalierungswerts um den Änderungswert der Ausgabeskalierungswert mit dem gleichen Änderungswert geändert wird, wie der Eingabeskalierungswert.

Besonders bevorzugt wird Verfahren, bei dem der Ausgabeskalierungswert als das Inverse des Eingabeskalierungswerts verwendet wird.

Bevorzugt wird demgemäss ein Verfahren, bei dem der Eingabeskalierungswert geändert wird, falls ein Eingabedatenwert der Eingabedaten einen Schwellenwert über- oder unterschreitet.

Bevorzugt wird demgemäss ein Verfahren, bei dem der Eingabeskalierungswert geändert wird, falls eine vorbestimmte Anzahl der Eingabedatenwerte der Eingangsdaten und/oder die Eingabedatenwerte über eine vorbestimmte Dauer einen Schwellenwert überschreiten oder unterschreiten, insbesondere gemittelt oder gewichtet überschreiten oder unterschreiten.

Bevorzugt wird demgemäss ein Verfahren, bei dem beim Über-schreiten des Schwellenwerts der Eingabeskalierungswert auf einen vorgegebenen Wert, insbesondere auf 1 gesetzt wird.

Bevorzugt wird ein Verfahren, bei dem beim Überschreiten oder Unterschreiten des Schwellenwerts der Eingabeskalierungswert um einen Skalierungsstufenwert als Änderungswert geändert wird.

Bevorzugt wird demgemäss ein Verfahren, bei dem die Änderung der Speicherdaten zusammen, insbesondere gleichzeitig mit der Änderung des Eingabeskalierungswerts durchgeführt wird.

Bevorzugt wird demgemäss ein Verfahren, bei dem die Änderung des Ausgabeskalierungswerts zusammen, insbesondere gleichzeitig mit der Änderung des Eingabeskalierungswerts durchgeführt wird.

Bevorzugt wird ein Verfahren, bei dem als die Eingabedaten Ton- und/oder Bilddaten verwendet werden.

Bevorzugt wird demgemäss eine Vorrichtung, wobei die Datenverarbeitungseinrichtung eine Ton- und/oder Bilddatenverarbeitungseinrichtung ist.

Bevorzugt wird eine Vorrichtung, die zum Durchführen eines demgemäßen Verfahrens ausgebildet und/oder angesteuert ist.

Ein Ausführungsbeispiel wird nachfolgend anhand der Zeichnung näher erläutert. Es zeigen:
- Fig. 1: schematisch eine Vorrichtung zur Datenverarbeitung;
- Fig. 2: einen beispielhaften Algorithmus zur Durchführung eines Verfahrens zur Rauschunterdrückung in einer solchen Datenverarbeitungseinrichtung;
- Fig. 3: ein erstes Unterprogramm des Verfahrensablaufs gemäß Fig. 2;
- Fig. 4: ein zweites Unterprogramm des Verfahrensablaufs gemäß Fig. 2;
- Fig. 5: einen zeitlichen Signalverlauf bei der Durchführung eines derartigen Verfahrens in einer solchen Datenverarbeitungseinrichtung; und
- Fig. 6: schematisch eine Vorrichtung zur Datenverarbeitung gemäß dem Stand der Technik.

Fig. 1 zeigt schematisch eine Vorrichtung zur Datenverarbeitung D, wobei der Begriff Vorrichtung breit zu fassen ist. Neben einer komplexen Vorrichtung in Art einer Schaltungsanordnung mit einer Vielzahl von einzelnen Baukomponenten oder in Art einer integrierten Einrichtung mit einer Vielzahl integrierter Schaltungskomponenten sind auch einzelne Bauelemente darunter zu verstehen. In einem einfachen Fall kann es sich beispielsweise lediglich um ein Verzögerungsglied handeln, in welches Daten eingegeben werden, um zeitlich versetzt wieder ausgegeben zu werden. Möglich ist auch eine Umsetzung als Verfahren bzw. Computeralgorithmus oder Steueralgorithmus. Bei einer Datenverarbeitungsinstanz als Bestandteil einer solchen Vorrichtung oder eines entsprechenden Verfahrens kann es sich entsprechend ebenfalls um ein eigenständiges Bauelement, um ein eigenständiges Steuerprogramm bzw. einen komplexen Algorithmus oder lediglich um eine Konfigurierung einfachster Art und Weise, wie im Fall eines Verzögerungsglieds, handeln.

Die beispielhafte Vorrichtung zur Datenverarbeitung D weist einen Dateneingang I zum Eingeben von Eingangseingabedaten x° auf. Bei den Eingangseingabedaten x° kann es sich um einzelne Datenwerte einer Folge von Daten handeln, beispielsweise aber auch um eine Vielzahl gruppierter Datenwerte, welche ein Wort ausbilden. Vorzugsweise handelt es sich bei den Eingangseingabedaten x° um Datenwerte eines Ton- und/oder Bildsignals. Der Dateneingang I ist mit einem ersten Eingang eines ersten Multiplikators MP1 verbunden. An einem zweiten Eingang des ersten Multiplikators MP1 ist eine Leitung zum Anlegen eines Eingabeskalierungswerts ing angeschlossen. Der erste Multiplikator MP1 multipliziert einen jeweils momentan anliegenden Eingangseingabedatenwert, der Eingangseingabedaten x° mit dem jeweils anliegenden Eingabeskalierungswert ing. Das Multiplikationsergebnis wird an einem Ausgang des ersten Multiplikators MP1 bereit gestellt, der mit einem Eingang einer Speichereinrichtung M verbunden ist. Außerdem ist der Ausgang des ersten Multiplikators MP1 direkt oder über einen Abgriff A mit einem Eingang einer Skalierungseinrichtung CS verbunden. Das Multiplikationsergebnis des ersten Multiplikators MP1 wird dadurch sowohl der Speichereinrichtung M als auch der Skalierungseinrichtung CS als Eingabedaten x angelegt.

Je nach Ausgestaltung kann es sich bei den Leitungen für die Daten x°, x, y, y° um einzelne Leitungen oder Bündel aus Leitungen, insbesondere einen Datenbus handeln. Im Fall eines Datenbusses ist der erste Multiplikator MP1 aus einer entsprechenden Vielzahl einzelner erster Multiplikatoren MP1 ausgebildet.

Die Skalierungseinrichtung CS berechnet entsprechend dem anliegenden Wert der Eingabedaten x oder entsprechend einer Folge von einzelnen Werten der Eingabedaten x den Eingabeskalierungswert ing, welcher dem ersten Multiplikator MP1 angelegt wird. Natürlich sind alternativ auch Anordnungen möglich, bei denen der Skalierungseinrichtung CS anstelle der Eingabedaten x die Eingangseingabedaten x° angelegt werden.

Die Eingabedaten x werden in der Speichereinrichtung M entsprechend der jeweiligen Anordnung und Funktionalität auf jeweils einen einer Vielzahl von Speicherplätzen M(1), M(2), M(3), ..., M(1), ..., M(L) gespeichert. Je nach Ausgestaltung ist die Speichereinrichtung M mit einer Datenverarbeitungsinstanz C verbunden. Die Datenverarbeitungsinstanz C kann als integrierter Bestandteil der eigentlichen Speichereinrichtung M, als eigenständige Baugruppe oder als Schnittstelle für einen Softwarezugriff ausgebildet sein. Im einfachen Fall eines Verzögerungsglieds bewirkt die Datenverarbeitungsinstanz C lediglich ein zeitlich verzögertes Ausgeben eines in die Speichereinrichtung M eingegebenen Datenwerts der Eingabedaten x.

Ein Ausgang der Speichereinrichtung M ist mit einem ersten Eingang eines zweiten Multiplikators MP2 verbunden, um aus der Speichereinrichtung M bzw. entsprechenden Speicherplätzen M(1), M(2), ... M(L) ausgegebene Ausgabedaten y mit einem Ausgabeskalierungswert og zu multiplizieren, welcher über eine entsprechende Leitung an einem zweiten Eingang des zweiten Multiplikators MP2 angelegt ist. Der Ausgabeskalierungswert og wird dabei vorzugsweise ebenfalls von der Skalierungseinrichtung CS bereitgestellt. Gemäß der bevorzugten Ausführungsform entspricht der Wert des Ausgabeskalierungswerts og jeweils dem Inversen 1/ing des Eingabeskalierungswerts ing. Derart in dem zweiten Multiplikator MP2 multiplizierte Daten werden als Ausgangsausgabedaten y° vom Ausgang des zweiten Multiplikators MP2 über eine entsprechende Verbindung einem Datenausgang O der Vorrichtung für Datenverarbeitung D zugeführt und an diesem zur Weiterleitung an weitere Komponenten bereitgestellt.

Als wesentlicher Bestandteil der Vorrichtung zur Datenverarbeitung D sind die Speichereinrichtung M und/oder die Skalierungseinrichtung CS derart ausgebildet und/oder angesteuert, dass die Speicherdaten in einzelnen oder vorzugsweise allen der Speicherplätzen M(1), M(2), ..., M(L) entsprechend einer Änderung des Eingabeskalierungswerts ing geändert werden. Dazu weist die Speichereinrichtung M einen Skalierungseingang auf, welcher mit der Skalierungseinrichtung SC zum Anlegen eines Änderungswerts s verbunden ist.

Die Skalierungseinrichtung CS stellt dabei vorzugsweise einen einzigen Änderungswert s bereit, mit welchem sowohl der Eingabeskalierungswert ing als auch die Speicherdaten in den Speicherplätzen M(1), M(2), ... M(L) multipliziert werden. Die Multiplikation erfolgt dabei vorzugsweise gleichzeitig, worunter insbesondere innerhalb eines einzigen Systemtakts der Schaltungsanordnung zu verstehen ist. Dadurch werden die Speicherdaten, welche in der Speichereinrichtung M momentan gespeichert sind, mit dem gleichen Änderungswert s geändert, wie der Eingabeskalierungswert ing, so dass eine einheitliche Skalierung für die in der Speichereinrichtung M befindlichen Speicherdaten und die nachfolgend über den Eingang der Speichereinrichtung M angelegten Eingabedaten x besteht.

Vorzugsweise erfolgt gleichzeitig mit der Änderung des Eingabeskalierungswertes ing auch eine entsprechende Änderung des Ausgabeskalierungswertes og durch Division durch den Änderungswert s oder durch Bestimmung des inversen 1/ing des geänderten Eingabeskalierungswerts ing. Dadurch erfolgt automatisch eine Rückskalierung der Speicherdaten nach deren Ausgabe als Ausgangsdaten y aus der Speichereinrichtung M.

Gemäß alternativer, jedoch weniger bevorzugter Ausführungsformen ist natürlich auch eine nur teilweise Skalierung der Speicherdaten gleichzeitig mit einer Änderung des Eingabeskalierungswerts ing möglich. Falls beispielsweise momentan am Ausgang der Speichereinrichtung M angeiegte Speicherdaten noch mit dem ursprünglichen Ausgabeskalierungswert og zu skalieren sind, wird der Ausgabeskalierungswert og entsprechend zu einem späteren Zeitpunkt geändert.

Baulich können insbesondere die Skalierungseinrichtung CS und die Datenverarbeitungsinstanz C als eine einzige Komponente oder als ein einziger Algorithmus ausgestaltet werden.

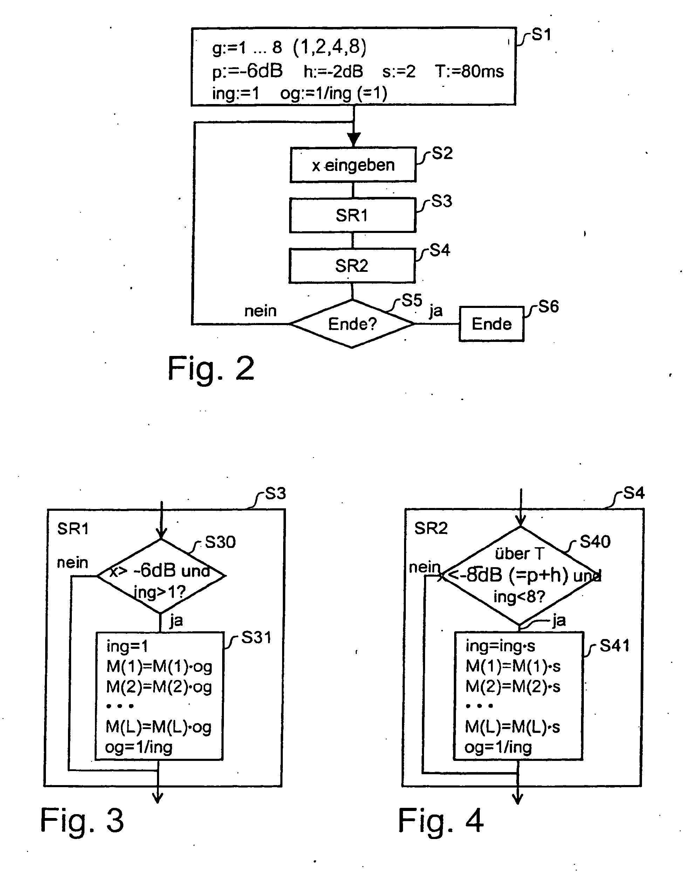

Fig. 2 zeigt einen beispielhaften Verfahrensablauf eines Verfahrens zur Rauschunterdrückung in einer Datenverarbeitungseinrichtung D. Der Verfahrensablauf bewirkt, dass ein Signal bzw. Eingabedaten x mit dem Eingabeskalierungswert ing derart skaliert werden, dass das Signal bzw. die Eingabedaten innerhalb des Blocks bzw. innerhalb der Speichereinrichtung M eine vorzugsweise optimale Aussteuerung haben. Nach dem Block bzw. bei der dargestellten Ausführungsform nach der Speichereinrichtung M wird das Signal bzw. die Ausgabedaten y mittels des Ausgabeskalierungswerts og wieder rückskaliert, insbesondere abgesenkt, so dass das Signal bzw. die Ausgangsausgabedaten y° wieder den ursprünglichen Signalpegel aufweisen. Zur Vermeidung von Störungen durch das Anheben bzw. Absenken des Signals bzw. der Daten innerhalb des Blocks bzw. der Datenverarbeitungseinrichtung D ohne eine Störung des Signals bzw. der Datenfolge wird dabei ein gleichzeitiges Skalieren der relevanten Datenwerte vorgesehen. D. h. gleichzeitig mit einer Änderung des Eingabeskalierungswerts ing bzw. des Ausgabeskalierungswerts og werden auch die vorzugsweise gesamten Speicherdaten in der Speichereinrichtung M entsprechend skaliert. Da die in der Speichereinrichtung hinterlegten Speicherdaten gegebenenfalls bereits vorskaliert sind, werden die Speicherdaten mit dem Änderungswert s skaliert, mit welchem der Eingangsskalierungswert ing skaliert wird. Besonders bevorzugt wird die Verfahrensweise für den Einsatz in Verbindung mit linearen Algorithmen.

Gemäß dem rein beispielhaften Verfahrensablauf aus Fig. 2 werden in einem ersten Schritt S1 Parameter vorbelegt. Für eine Folge aus diskreten Verstärkungswerten wird ein Bereich von 1 bis 8 vorgegeben, d. h. beispielsweise festgelegt, dass der einsetzbare Verstärkungswert g in einem Bereich von 1 bis 8, insbesondere entsprechend der Werte 1, 2, 4, 8 belegt wird. Dies entspricht beispielsweise einer Verstärkung von 0 ... 18 dB. Außerdem soll eine Regelung auf einen Signalpegel p erfolgen, welcher beispielsweise mit p:= -6 dB festgesetzt wird. Dies entspricht einem Reservebereich (Headroom) von 6 dB. Eine Hysterese h wird beispielsweise auf h:= -2 dB festgelegt. Als Änderungswert s bzw. insbesondere Skalierungsstufenwert s wird beispielsweise vorgegeben, dass der Änderungswert s, welcher von Zyklus zu Zyklus des Verfahrensablaufs eingesetzt wird, festgesetzt wird mit s:= 2. Neben der prinzipiellen Möglichkeit, jeweils einzelne Eingabedatenwerte der Eingabedaten x zu betrachten, wird eine Verfahrensweise bevorzugt, bei welcher jeweils eine zeitliche Abfolge T bzw. eine Anzahl aufeinanderfolgender Datenwerte der Eingabedaten x betrachtet und gewichtet oder gemittelt wird, um eine Änderung der Skalierung einzuleiten. Festgelegt wird beispielsweise eine vorbestimmte Dauer T bzw. Periode des Zyklus von T:= 80 ms. Weiterhin werden Voreinstellungen der Skalierungswerte vorgenommen, wobei vorzugsweise zu Beginn der Eingabeskalierungswert ing skalierungsfrei festgelegt wird, so dass ing:= 1 gilt. Der Ausgabeskalierungswert og wird entsprechend festgelegt, insbesondere als das Inverse 1/ing des Eingabeskalierungswerts ing festgesetzt.

In einem zweiten Verfahrensschritt S2 werden einer oder mehrere Eingabedaten x eingegeben. Nachfolgend wird überprüft, ob der aktuelle Eingabedatenwert der eingegebenen Daten x oder eine Abfolge von Eingabedatenwerten der Eingabedaten x einen Schwellenwert über- und/oder unterschreiten. Für Über- bzw. Unterschreiten können auch verschiedene Schwellenwerte angesetzt werden. Insbesondere sind auch Einzelwertbetrachtungen für den Fall einer Übersteuerung im Gegensatz zu Betrachtung einer Vielzahl von Werten bei Untersteuerung oder sonstigen Abweichungen des Pegels der Eingabedaten möglich. Beim dargestellten Ausführungsbeispiel dienen dazu zwei Unterprogramme SR1, SR2, welche in den nachfolgenden Verfahrensschritten S3, S4 ablaufen. In einer nachfolgenden Abfrage S5 wird überprüft, ob weitere Eingabedaten x vorliegen und der Algorithmus fortzuführen ist. Wenn der Algorithmus nicht zu beenden ist, erfolgt ein Rücksprung zum zweiten Verfahrensschritt S2 zur Eingabe weiterer Eingabedaten x. Andernfalls wird der Algorithmus in einem nachfolgenden Schritt S6 beendet.

Fig. 3 zeigt einen beispielhaften Ablauf für das erste Unterprogramm SR1, d. h. den dritten Verfahrensschritt S3 gemäß dem Ablauf aus Fig. 2. In einem ersten Verfahrensschritt S30 dieses Unterprogramms SR1 wird beispielsweise überprüft, ob der Eingabedatenwert der Eingabedaten x, welcher zuletzt eingegeben wurde, größer als ein Schwellenwert ist, wobei als Schwellenwert der Wert des Pegels p angesetzt wird. Außerdem wird überprüft, ob der Eingabeskalierungswert ing größer als 1 ist, d. h. ob eine verstärkende Skalierung der Eingabedaten x vorgenommen wird.

Falls nein, wird das Unterprogramm SR1 beendet. Falls ja, erfolgt eine Neubelegung des Eingabeskalierungswerts ing auf einen niedrigeren Wert, insbesondere auf 1. Der Wert gleich 1 wird insbesondere zur Vermeidung einer Übersteuerung bevorzugt, dies unter Inkaufnahme einer nachfolgenden Untersteuerung, falls nur eine geringfügige Übersteuerung statt gefunden hat. Alternativ können auch verschiedenartige Reduzierungen der Größe des Eingabeskalierungswerts ing abhängig von verschiedenen Schwellenwerten vorgenommen werden, um eine allmähliche Reduzierung des Eingabeskalierungswerts ing vorzunehmen. Außerdem werden die Speicherdaten auf den Speicherplätzen M(1), M(2), ..., M(L) jeweils mit dem noch geltenden Ausgabeskalierungswert og multipliziert, so dass die vorgenommene Skalierung vollständig rückgängig gemacht wird. Weiterhin wird der Ausgabeskalierungswert og neu belegt, insbesondere wieder mit dem Inversen des Eingabeskalierungswerts ing belegt.

Gemäß alternativer Ausführungsformen mit einer allmählichen Reduzierung erfolgt eine Multiplikation des Eingabeskalierungswerts ing sowie der Speicherdaten auf den Speicherplätzen M(1), M(2), ..., M(L) mit jeweils dem anzusetzenden Änderungswert s sowie außerdem eine Änderung des Ausgabeskalierungswerts og auf wiederum das Inverse des Eingabeskalierungswerts ing (S31).

Fig. 4 zeigt ein beispielhaftes zweites Unterprogramm SR2 gemäß dem vierten Verfahrensschritt S4 des Verfahrensablaufs aus Fig. 2. Dabei werden in einem ersten Unterschritt S40 über die Dauer T die Eingabedaten x mit einem Schwellenwert, vorliegend dem Signalpegel p Minus Hyterese h verglichen. Sind alle Werte während der Zeit T kleiner als der Vergleichspegel p-h und außerdem der Eingabeskalierungswert ing kleiner der maximalen Verstärkung g = 8, erfolgt eine Änderung der Skalierungswerte. Dazu werden gleichzeitig der Eingabeskalierungswert ing und die Speicherdaten auf den Speicherplätzen M(1), M(2), ..., M(L) mit dem Änderungswert s multipliziert. Außerdem wird der Ausgabeskalierungswert og als das Inverse 1/ing des aktualisierten Eingabeskalierungswertes ing neu belegt S41. Danach oder im Fall eines negativen Ergebnisses bei dem Abfrageschritt wird das zweite Unterprogramm SR2 beendet.

Fig. 5 zeigt beispielhaft einen zeitlichen Ablauf einer Amplitude X von Eingangseingabedaten x° und den Eingabedaten x in einem unteren Diagramm über der Zeitachse mit fortlaufender Zeit t bzw. in dem oberen Diagramm einen Verstärkungswert des Eingabeskalierungswerts ing und des Ausgabeskalierungswerts og über der Zeit t. Dargestellt sind dabei aufeinanderfolgende Zeitzyklen mit jeweils der Dauer T, welche gemäß beispielsweise dem zweiten Unterprogramm SR2 für eine Regelung bzw. Steuerung der Skalierung bzw. der Änderung der Skalierung verwendet werden.

In einem ersten zeitliche Intervall schwang die Amplitude der Eingangseingabedaten x° um den Wert des Pegels p, so dass der Eingabeskalierungswert ing gleich 1 gesetzt ist, d. h. keine Verstärkung vorgenommen wird. Dadurch sind die Eingabedaten x in der Speichereinrichtung M gleich den am Eingang I anliegenden Eingangseingabedaten x°. Zu einem späteren Zeitpunkt OT erfolgt ein Abfall der Amplitude der Eingangseingabedaten x° und somit der Eingabedaten x unter den als Schwellenwert gesetzten Pegelwert p-h von -8 dB. Nachdem die Amplituden über eine Dauer T des Zyklus unterhalb des Schwellenwertes liegen, wird eine Änderung um den Änderungswert s für die Skalierung vorgenommen. Der Eingabeskalierungswert ing wird von 1 mit 2 multipliziert bzw. verdoppelt, da als Änderungswert s ein Skalierungsstufenwert mit dem Betrag s:= 2 angesetzt ist. Außerdem erfolgt eine entsprechende Multiplikation der momentanen Speicherdaten mit dem Änderungswert s und eine Neufestsetzung des Ausgabeskalierungswerts og auf das Inverse des Eingabeskalierungswertes ing, d. h. auf og = 0,5. Die Amplitude bzw. der Pegel der Eingabedaten x steigt dadurch auf einen höheren Wert an, welcher bei dem dargestellten Ausführungsbeispiel gemäß Fig. 5 jedoch immer noch unter dem Schwellenwert liegt. Beim dargestellten Ausführungsbeispiel wird der Schwellenwert beispielsweise aus der Summe des Werts des Signalpegels p und der Hysterese h bestimmt. Nach einer erneuten Dauer T erfolgt entsprechend eine erneute Änderung der Skalierung. Der Eingabeskalierungswert ing wird wiederum verdoppelt auf eine Verstärkung V mit dem Wert ing = 4. Die Speicherdaten, welche momentan in der Speichereinrichtung M hinterlegt sind, werden mit dem Änderungswert s multipliziert. Der Ausgabeskalierungswert og wird erneut als das Inverse des Eingabeskalierungswertes ing festgesetzt und beträgt nachfolgend og = 0,25. Dadurch erhöht sich die Amplitude bzw. der Pegel der Eingabedaten x trotz weiterhin Eingangseingabedaten x° auf sehr niedrigem Niveau.

Dadurch, dass über die Dauer T eines nächsten Zyklus die Eingabedaten x durch die Skalierung über dem Schwellenwert liegen, erfolgt in einer nachfolgenden Zeitspanne eine Reduzierung oder Rücknahme der Skalierung, wobei entweder ein sofortiges Rücksetzen aller Werte, wie dies dargestellt ist, oder eine allmähliche Reduzierung der Werte vorgenommen wird.

Ein derartiges Verfahren zur Rauschunterdrückung bzw. eine entsprechende Vorrichtung bieten eine Vielzahl von Vorteilen. Durch das gleichzeitige Skalieren der Skalierungsfaktoren und der momentanen Speicherinhalte wird eine Störung des Signals bzw. der Datenfolge vermieden. Das Signal-zu-Rausch-Verhältnis der Vorrichtung erhöht sich vorteilhafterweise um die maximale Verstärkung, beim vorliegenden Beispiel z. B. um 18 dB. Vorteilhafterweise wird nur eine Variable für einen Exponenten benötigt. Einsetzbar sind ein solches Verfahren bzw. eine solche Vorrichtung insbesondere für Audio-Algorithmen. Eine Implementierung auf Fixpunkt-Prozessoren ist vorteilhaft umsetzbar. Der Rechenaufwand kann durch das Ändern der Skalierungswerte nach einer festlegbaren Dauer T bzw. Zyklusperiode festgelegt werden, so dass der Rechenaufwand nur einmal pro Verfahrenszyklus anfällt.

Wie beschrieben, ist eine Vielzahl von Variationen der Verfahrensweise bzw. der Anordnung von Vorrichtungskomponenten möglich. Insbesondere hinsichtlich sofortiger oder abgestufter Verstärkung bzw. Abschwächung der Verstärkung bzw. der diversen Anderungswerte sind verschiedenartige Ausführungsbeispiele umsetzbar.

## Patentansprüche

1. Verfahren zur Rauschunterdrückung in einer Datenverarbeitungseinrichtung (D) mit einer Speichereinrichtung (M), wobei
- in die Speichereinrichtung (M) Eingabedaten (x) eingegeben und als Speicherdaten in jeweiligen Speicherplätzen (M(1), M(2), ..., M(L)) gespeichert werden und die Speicherdaten als Ausgabedaten (y) aus der Speichereinrichtung (M) ausgegeben werden,
- die Eingabedaten (x) mit einem Eingabeskalierungswert (ing) skaliert sind und
- die Ausgabedaten (y) insbesondere mit einem Ausgabeskalierungswert (og) skaliert werden,
**dadurch gekennzeichnet, dass**
- zur Rauschunterdrückung bei einer Änderung des Eingabeskalierungswerts (ing) auch Speicherdaten in den Speicherplätzen (M(1), M(2), ..., M(L)) entsprechend geändert werden.

2. Verfahren nach Anspruch 1, bei dem bei der Änderung des Eingabeskalierungswertes (ing) alle Speicherdaten in den Speicherplätzen (M(1), M(2), ..., M(L)) entsprechend geändert werden.

3. Verfahren nach Anspruch 1 oder 2, bei dem bei der Änderung des Eingabeskalierungswerts (ing) um einen Änderungswert (s) die Speicherdaten in den Speicherplätzen (M(1), M(2), M(L)) mit dem gleichen Änderungswert (s) geändert werden, wie der Eingangsskalierungswert (ing).

4. Verfahren nach einem vorstehenden Anspruch, bei dem bei der Änderung des Eingabeskalierungswerts (ing) auch der Ausgabeskalierungswert (og) entsprechend geändert wird.

5. Verfahren nach Anspruch 4, bei dem bei der Änderung des Eingabeskalierungswerts (ing) um den Änderungswert (s) der Ausgabeskalierungswert (og) mit dem gleichen Änderungswert (s) geändert wird, wie der Eingabeskalierungswert (ing).

6. Verfahren nach einem vorstehenden Anspruch, bei dem der Ausgabeskalierungswert (og) als das Inverse (1/ing) des Eingabeskalierungswerts (ing) verwendet wird.

7. Verfahren nach einem vorstehenden Anspruch, bei dem der Eingabeskalierungswert (ing) geändert wird, falls ein Eingabedatenwert der Eingangsdaten (x) einen Schwellenwert (p) über- oder unterschreitet.

8. Verfahren nach einem vorstehenden Anspruch, bei dem der Eingabeskalierungswert (ing) geändert wird, falls eine vorbestimmte Anzahl der Eingabedatenwerte der Eingangsdaten (x) und/oder die Eingabedatenwerte (x) über eine vorbestimmte Dauer (T) einen Schwellenwert (p) überschreiten oder unterschreiten, insbesondere gemittelt oder gewichtet überschreiten oder unterschreiten.

9. Verfahren nach Anspruch 7 oder 8, bei dem beim Überschreiten des Schwellenwerts (p) der Eingabeskalierungswert (ing) auf einen vorgegebenen Wert, insbesondere auf 1 gesetzt wird.

10. Verfahren nach Anspruch 7 oder 8, bei dem beim Überschreiten oder Unterschreiten des Schwellenwerts (p) der Eingabeskalierungswert (ing) um einen Skalierungsstufenwert als Änderungswert (s) geändert wird.

11. Verfahren nach einem vorstehenden Anspruch, bei dem die Änderung der Speicherdaten zusammen, insbesondere gleichzeitig mit der Änderung des Eingabeskalierungswerts (ing) durchgeführt wird.

12. Verfahren nach einem vorstehenden Anspruch, bei dem die Änderung des Ausgabeskalierungswerts (og) zusammen, insbesondere gleichzeitig mit der Änderung des Eingabeskalierungswerts (ring) durchgeführt wird.

13. Verfahren nach einem vorstehenden Anspruch, bei dem als die Eingabedaten (x) Ton- und/oder Bilddaten verwendet werden.

14. Vorrichtung zur Datenverarbeitung (D) mit
- einem Dateneingang (I) zum Eingeben von Eingangseingabedaten (x°),
- einer Speichereinrichtung (M) mit Speicherplätzen (M(1), M(2), ... M(L)) zum Speichern von Eingabedaten (x) als Speicherdaten,
- einem Datenausgang (O) zum Ausgeben von Ausgabedaten (y; y°) aus der Speichereinrichtung (M),
- einer Datenverarbeitungsinstanz (C) zum Verarbeiten der Speicherdaten und
- einer Skalierungseinrichtung (A, MP1, CS) zum Skalieren der Eingangseingabedaten (x°) mit einem Eingabeskalierungswert (ing) zu den zu speichernden Eingabedaten (x),
**dadurch gekennzeichnet, dass**
- die Speichereinrichtung (M) und/oder die Skalierungseinrichtung (CS) zur Rauschunterdrückung derart ausgebildet und/oder angesteuert sind, dass Speicherdaten in den Speicherplätzen (M(1), M(2), ..., M(L)) entsprechend einer Änderung der Eingabeskalierung des Eingabeskalierungswerts (ing) geändert werden.

15. Vorrichtung nach Anspruch 14, wobei die Datenverarbeitungseinrichtung (D, C) eine Ton- und/oder Bilddatenverarbeitungseinrichtung ist.

16. Vorrichtung nach Anspruch 14 oder 15, die zum Durchführen eines Verfahrens nach einem der Ansprüche 1 - 13 ausgebildet und/oder angesteuert ist.

## Claims

1. A method for noise suppression in a data processing device (D) having a storage device (M), where the input data (x) is entered into the storage device (M) and saved as storage data in the respective storage locations (M(1), M(2), ..., M(L)), and the storage data is provided as output data (y) from the storage device (M);
the scaled input data (x) is obtained by means of an input scaling value (ing); and
the output data (y) is scaled in particular with an output scaling value (og), **characterized in that** the storage data in the storage locations (M(1), M(2), ..., M(L)) is respectively changed for noise suppression when a change occurs in the input scaling value (ing).

2. The method of claim 1, where all of the storage data in the storage locations (M(1), M(2), ..., M(L)) is changed respectively when a change occurs in the input scaling value (ing).

3. The method of claim 1 or 2, where the storage data in the storage locations (M(1), M(2), ..., M(L)) is changed respectively by a change value (s) when a change with the same change value (s) occurs in the input scaling value (ing).

4. The method of any of the preceding claims, where the output scaling value (og) is changed respectively when a change occurs in the input scaling value (ing).

5. The method of claim 4, where the output scaling value (og) is changed respectively by a change value (s) when a change with the same change value (s) occurs in the input scaling value (ing).

6. The method of any of the preceding claims, where the output scaling value (og) is the inverse (1/ing) of the input scaling value (ing).

7. The method of any of the preceding claims, where the input scaling value (ing) is changed if the input data value of the scaled input data (x) is greater or less than a threshold value (p).

8. The method of any of the preceding claims, where the input scaling value (ing) is changed if a predetermined number of data values of the scaled input data (x) and/or the scaled input data (x) are greater or less than the threshold value (p) over a predetermined period of time (T), in particular if they go averagely or by a majority above or below the threshold value (p).

9. The method of claim 7 or 8, where the input scaling value (ing) is set to a predetermined value, in particular to the value of 1, when the threshold value (p) is being exceeded.

10. The method of claim 7 or 8, where the input scaling value (ing) is changed by a scaling step value as the change value (s) upon going above or below the threshold value (p).

11. The method of any of the preceding claims, where the step of changing the storage data is performed together with and in particular at the same time as the step of changing the input scaling value (ing).

12. The method of any of the preceding claims, where the step of changing the output scaling value (og) further comprises the step of changing the output scaling value (og) at the same time as the change occurs in the input scaling value (ing).

13. The method of any of the preceding claims, where the input data (x) comprises audio and/or video data.

14. A data processing device (D), comprising:
a data entry device (I) for entering the input data (x°);
a storage device (M) having storage locations (M(1), M(2), ..., M(L)) that store the input data (x) as storage data;
a data output device (O) providing the output data (y; y°) from the storage device (M);
a data processor (C) for processing the storage data; and
a scaling device (A, MP1, CS) for scaling the input data (x°) with an input scaling value (ing) to obtain the scaled input data (x) to be saved, **characterized in that**
the storage device (M) and/or the scaling device (CS) are adapted to and/or actuated for noise suppression in such a way that the storage data is changed in the storage locations (M(1), M(2), ..., M(L)) respectively to a change in the input scaling of the input scaling value (ing).

15. The data processing device of claim 14, where the data processing device (D, C) is an audio and/or video processing device.

16. The data processing device of claim 14 or 15, which is built and/or actuated in such a way to perform a method of any of the claims 1 to 13.

## Revendications

1. Procédé de réduction de bruit dans un dispositif de traitement de données (D) comportant un dispositif de mémoire (M), dans lequel
- des données d'entrée (x) sont entrées dans le dispositif de mémoire (M) et mémorisées comme données de mémoire dans des emplacements de mémoire respectifs (M(1), M(2), ..., M(L)) et les données de mémoire sont sorties du dispositif de mémoire (M) comme données de sortie (y),
- les données d'entrée (x) sont mises à l'échelle avec une valeur de mise à l'échelle d'entrée (ing) et
- les données de sortie (y) sont mises à l'échelle en particulier avec une valeur de mise à l'échelle de sortie (og),
**caractérisé en ce que**
- en cas de modification de la valeur de mise à l'échelle d'entrée (ing), des données de mémoire dans les emplacements de mémoire (M(1), M(2), ..., M(L)) sont également modifiées en conséquence pour la réduction de bruit.

2. Procédé selon la revendication 1, dans lequel, dans le cas de la modification de la valeur de mise à l'échelle d'entrée (ing), toutes les données de mémoire dans les emplacements de mémoire (M(1), M(2), ..., M(L)) sont modifiées en conséquence.

3. Procédé selon la revendication 1 ou 2, dans lequel, dans le cas de la modification de la valeur de mise à l'échelle d'entrée (ing) selon une valeur de modification (s), les données de mémoire dans les emplacements de mémoire (M(1), M(2), ..., M(L)) sont modifiées avec la même valeur de modification (s) que la valeur de mise à l'échelle d'entrée (ing).

4. Procédé selon l'une des revendications précédentes, dans lequel, dans le cas de la modification de la valeur de mise à l'échelle d'entrée (ing), la valeur de mise à l'échelle de sortie (og) est également modifiée en conséquence.

5. Procédé selon la revendication 4, dans lequel, dans le cas de la modification de la valeur de mise à l'échelle d'entrée (ing) selon la valeur de modification (s), la valeur de mise à l'échelle de sortie (og) est modifiée avec la même valeur de modification (s) que la valeur de mise à l'échelle d'entrée (ing).

6. Procédé selon l'une des revendications précédentes, dans lequel la valeur de mise à l'échelle de sortie (og) est utilisée comme l'inverse (1/ing) de la valeur de mise à l'échelle d'entrée (ing).

7. Procédé selon l'une des revendications précédentes, dans lequel la valeur de mise à l'échelle d'entrée (ing) est modifiée dans le cas où une valeur de donnée d'entrée des données d'entrée (x) dépasse vers le haut ou vers le bas une valeur seuil (p).

8. Procédé selon l'une des revendications précédentes, dans lequel la valeur de mise à l'échelle d'entrée (ing) est modifiée dans le cas où un nombre prédéfini de valeurs de données d'entrée des données d'entrée (x) et/ou les valeurs de données d'entrée (x) dépassent vers le haut ou vers le bas une valeur seuil (p) pendant une durée prédéfinie (T), en particulier la dépassent vers le haut ou vers le bas en moyenne ou en pondération.

9. Procédé selon la revendication 7 ou 8, dans lequel, en cas de dépassement vers le haut de la valeur seuil (p), la valeur de mise à l'échelle d'entrée (ing) est mise à une valeur prédéfinie, en particulier à 1.

10. Procédé selon la revendication 7 ou 8, dans lequel,en cas de dépassement vers le haut ou vers le bas de la valeur seuil (p), la valeur de mise à l'échelle d'entrée (ing) est modifiée d'une valeur palier de mise à l'échelle comme valeur de modification (s).

11. Procédé selon l'une des revendications précédentes, dans lequel la modification des données de mémoire est effectuée en conjonction avec, en particulier en même temps que, la modification de la valeur de mise à l'échelle d'entrée (ing).

12. Procédé selon l'une des revendications précédentes, dans lequel la modification de la valeur de mise à l'échelle de sortie (og) est effectuée en conjonction avec, en particulier en même temps que, la modification de la valeur de mise à l'échelle d'entrée (ing).

13. Procédé selon l'une des revendications précédentes, dans lequel des données de son et/ou d'image sont utilisées comme données d'entrée (x).

14. Dispositif de traitement de données (D) comportant
- une entrée de données (I) pour entrer des données d'entrée à entrer (x°),
- un dispositif de mémoire (M) doté d'emplacements de mémoire (M(1), M(2), ..., M(L)) pour mémoriser des données d'entrée (x) comme données de mémoire,
- une sortie de données (O) pour sortir des données de sortie (y ; y°) du dispositif de mémoire (M),
- une instance de traitement de données (C) pour traiter les données de mémoire et
- un dispositif de mise à l'échelle (A, MP1, CS) pour mettre à l'échelle les données d'entrée à entrer (x°) avec une valeur de mise à l'échelle d'entrée (ing) par rapport aux données d'entrée à mémoriser (x), **caractérisé en ce que**
- le dispositif de mémoire (M) et/ou le dispositif de mise à l'échelle (CS) sont configurés et/ou commandés pour la réduction de bruit de telle manière que des données de mémoire dans les emplacements de mémoire (M(1), M(2), ..., M(L)) sont modifiées selon une modification de la mise à l'échelle d'entrée de la valeur de mise à l'échelle d'entrée (ing).

15. Dispositif selon la revendication 14, dans lequel le dispositif de traitement de données (D, C) est un dispositif de traitement de données de son et/ou d'image.

16. Dispositif selon la revendication 14 ou 15, qui est configuré et/ou commandé pour effectuer un procédé selon l'une des revendications 1 à 13.
